# EUROPÄISCHE PATENTANMELDUNG

(11) **EP 1 743 878 A1**
(43) Veröffentlichungstag der Anmeldung: **17.01.2007**
(21) Anmeldenummer: 06076424.8
(22) Anmeldetag: 13.07.2006
(51) Int. Cl.: C04B 35/593, B21B 27/00

(54) **Werkzeug für die Handhabung oder Umformung von Bauteilen mit Eisen im Hochtemperaturbereich und Verfahren zu seiner Herstellung**

(30) Priorität: 14.07.2005 DE 102005034128
(71) Anmelder: Fraunhofer-Gesellschaft zur Förderung der angewandten Forschung e.V., 80686 München (DE)
(72) Erfinder: Klemm, Hagen, Dr., 01217 Dresden (DE); Petasch, Uwe, Dr., 01920 Panschwitz-Kuckau (DE)
(74) Vertreter: Pfenning, Meinig & Partner GbR

(57) **Zusammenfassung**

Die Erfindung betrifft Werkzeuge für die Handhabung oder Umformung von Bauteilen mit Eisen im Hochtemperaturbereich und Verfahren zu ihrer Herstellung. Dabei sind nichtoxidische Keramiken auf der Basis von Silizium bei Kontakt mit Eisen bei hohen Temperaturen instabil und insbesondere ihre mechanischen Eigenschaften verschlechtern sich. Gemäß der gestellten Aufgabe soll die Lebensdauer und Warmfestigkeit solcher Werkzeuge erhöht werden. Die erfindungsgemäßen Werkzeuge sind dabei zum größten Teil aus gesintertem Siliziumnitrid gebildet und es ist zusätzlich mindestens eine chemische Verbindung mit Eisen, als Verstärkungskomponente mit 1 bis 10 Vol.-% im Werkstoff enthalten

## Beschreibung

Die Erfindung kann für Werkzeuge, wie Auflagen, Rollen und Walzen, die in Hochtemperaturprozessen, bevorzugt Umformprozessen, Transportprozessen, Auflagen für Wärmebehandlungsprozesse in Kontakt mit Eisen oder Eisenlegierungen und Stählen eingesetzt werden.

Für viele Anwendungen ist ein Einsatz bei Temperaturen in der Nähe der Schmelztemperatur von Werkstoffen gewünscht. Bei Eisen und dessen Legierungen liegt die Schmelztemperatur aber deutlich oberhalb 1000 °C, so dass hochwarm- und verschleißfeste Werkstoffe für Werkzeuge zur Handhabung und Umformung erforderlich sind. Hierfür geeignete Metalle oder Metalllegierungen haben aber Nachteile, da sie z.B. chemisch reagieren, verschleißen oder auch zu Korrosion neigen.

Si₃N₄-Werkstoffe, als nichtoxidische Keramik erreichen auch bei Temperaturen im Bereich zwischen 1400 und 1500°C ein hohes Niveau bzgl. ihrer mechanischen Eigenschaften und können somit in Prozessen mit hohen Festigkeitsanforderungen eingesetzt werden (z.B. Thixoforming von Stahl).

Es ist aber bekannt, dass nichtoxidische keramische Werkstoffe auf der Basis von Silizium (Si₃N₄, SiC auch MoSi₂) bei Kontakt mit Eisen enthaltenden Werkstoffen instabil sind. Sie bilden Eisensilizide und schädigen die Oberflächen der Bauteile aus einem Fe-Werkstoff und der Keramik, so dass eine Anwendung mit Kontakten zwischen Eisen und diesen Werkstoffen auf der Basis von Silizium bei hohen Temperaturen nicht möglich ist.

Es kommt dabei an der Oberfläche zu Korrosionseffekten, die die Festigkeit solcher Werkzeuge reduziert, Verschleiß hervorruft, der z.B. die Maßhaltigkeit von Umformwerkzeugen beeinträchtigt und dadurch eine stark verkürzte Lebensdauer der Werkzeuge zu verzeichnen ist.

Es ist daher Aufgabe der Erfindung Werkzeuge für die Handhabung oder Umformung von Bauteilen aus Eisen oder einer Eisenlegierung im Hochtemperaturbereich zur Verfügung zu stellen, deren Lebensdauer und Warmfestigkeit erhöht ist.

Erfindungsgemäß löst ein Verfahren, das die Merkmale des Anspruchs 1 aufweist, diese Aufgabe. Es kann mit einem Verfahren nach Anspruch 6 hergestellt werden.

Vorteilhafte Ausgestaltungen und Weiterbildungen sind mit in untergeordneten Ansprüchen bezeichneten Merkmalen möglich.

Die erfindungsgemäßen Werkzeuge sind dabei aus einem Siliziumnitridwerkstoff hergestellt, der zusätzlich 1 bis 10 Vol.-%, bevorzugt mindestens 3 Vol.-% einerchemischen Eisenverbindung, als Verstärkungskomponente enthält.

Die Verstärkungskomponente kann dabei ein Silizid, ein Silizidgemisch, ein Carbid, ein Nitrid, ein Silikat oder Oxid von Eisen sein. Es kann auch ein Gemisch unterschiedlicher Eisenverbindungen eingesetzt werden.

Die jeweiligen Eisenverbindungen werden dabei reaktiv beim Sinterprozess aus einer anderen Eisenverbindung, beispielsweise Eisenoxid oder auch reinem Eisen gebildet. Beim Einsatz von Eisenoxid reagiert dann der Sauerstoff mit einem anderen chemischen Element oder einer anderen chemischen Verbindung im Werkzeugwerkstoff.

Im Werkzeugwerkstoff können außerdem auch Cobalt und/oder Nickel sowie an sich bekannte Sinteradditive enthalten sein.

Als weitere Verstärkungskomponenten können Silizide, Nitride und/oder Carbide, die mit Elementen die ausgewählt aus der Gruppe Ni, Co, B, Ti, Mo, W, Cr, Ta, Nb, Mn und V sind, im für die Herstellung erfindungsgemäßer Werkzeuge eingesetzten Werkstoff enthalten sein.

Durch Verstärkung mit o.g. Verbindungen wird die Kontaktkorrosion zwischen Eisen und der Siliziumnitridkeramik stark behindert. Die Reaktionszone an den Oberflächen zwischen Werkzeug und Bauteil kann um den Faktor von ca. 10² reduziert werden. Damit wird ein Einsatz bei hohen Temperaturen in Kontakt mit Eisenwerkstoffen über einen erheblich verlängerten Zeitraum möglich, da keine bzw. zumindest erheblich verringerte chemischen Reaktionen bzw. Diffusionseffekte zwischen den Werkstoffen des Werkzeuges und des jeweiligen Bauteils auftreten. So wird insbesondere eine weitere Eisen-Silizidbildung im oberflächennahen Bereich des Werkzeugwerkstoffs vermieden.

Nachfolgend soll die Erfindung an Hand von Ausführungsbeispielen erläutert werden.

### Beispiele:

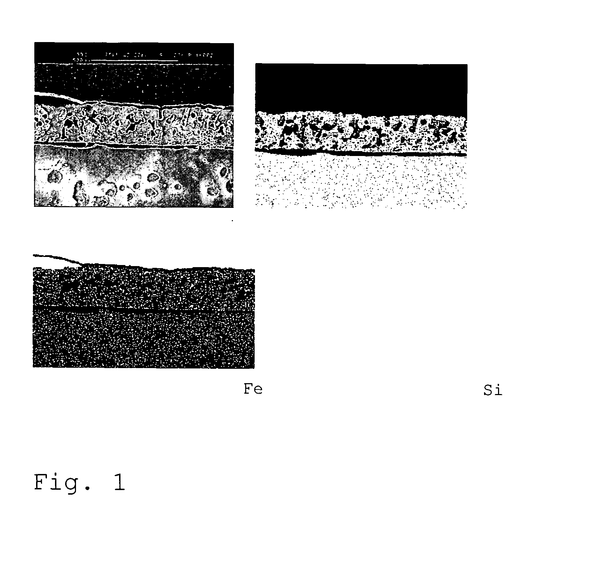

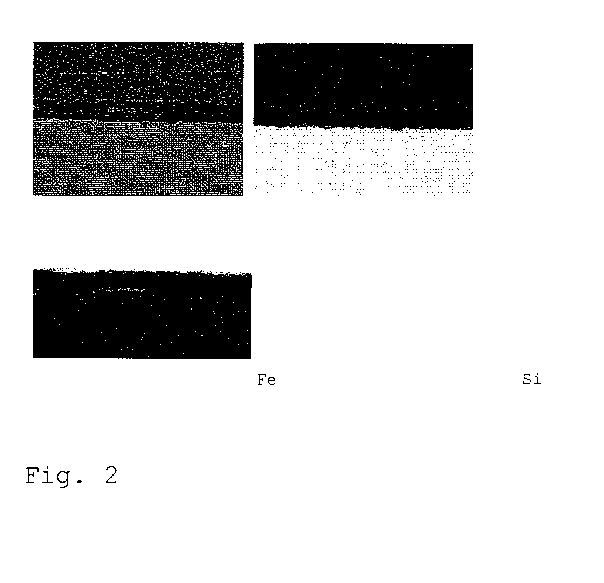

1. Stand der Technik: 94 Masse-% Si₃N₄, 6 Masse-% Sc₂O₃, gasdruckgesintert, Phasen nach Sinterung: Si₃N₄, Sc₂Si₂O₇,
   Kontaktreaktion zu Stahl C38 bei 1400°C, durchschnittliche Dicke der Korrosionsschicht: 300 µm
   Figur 1 zeigt eine REM-Aufnahme eines polierten Querschliffes an der Korrosionszone zwischen Si3N4 und Stahl, Elementverteilung von Fe und Si durch EDX
2. Ein Pulvergemisch mit 89 Masse-% Si₃N₄, 6 Masse-% Sc₂O₃ und 5 Masse-%Fe₂O₃ wurden gasdruckgesintert,
   Es bildeten sich folgende Phasen nach Sinterung: Si₃N₄ 85 Vol.-%, Sc₂Si₂O₇ 8 Vol.-%, FeSi₂ 5 Vol.-%, Fe₂SiO₄ 2 Vol.-%
   Kontaktreaktion zu Stahl C38 bei 1400°C, Dicke der Korrosionsschicht: max. 2 µm Siehe Figur 2
3. Eine Pulvermischung mit 72 Masse-% Si3N4, 15 Masse-%Y203, 3 Masse-% Yb203, 5 Masse-% Fe203, 5 Masse-% MoSi2, wurden gasdruckgesintert, Gebildete Phasen nach der Sinterung: Si3N4... 81 Vol.-%, Y5Si3012N... 10 Vol.-%, FeSi2... 4 Vol.-%, Fe2Si04 1 Vol.-%, FeN 1 Vol.-%, Mosi2 3 Vol.-%
   Kontaktreaktion zu Stahl 100 Cr6 bei 1400°C,
   Dicke der Korrosionsschicht: 4 µm
4. Ein Pulvergemisch mit 75 Masse-% Si3N4, 5 Masse-% WC, 12 Masse-% Y203, 4 Masse-% NiO, 4 Masse-%
   Fe203 wurde gasdruckgesintert.
   Gebildete Phasen nach der Sinterung: Si3N4 82 Vol.-%, WSi2 1 Vol.-%, SiC 1 Vol.-%, Y5Si3O12N.8.Vol.-%, FeSi2.3.Vol.-%, Fe2Si04 1 Vol.-%, NiSi2 3 Vol.-%, Ni2Si04 1 Vol.-%.
   Kontaktreaktion zu Stahl C38 bei 1400°C,
   Dicke der Korrosionsschicht. Max 8 µm
5. Ein Pulvergemisch 76 Masse-% Si3N4, 5 Masse-% TiN, 10 Masse-% La203, 6 Masse-% CoO, 3 Masse-% Fe wurde heißgepresst.
   Gebildete Phasen nach der Sinterung: Si3N4... 82,5 Vol.-%, TiN 3 Vol.-%, La9,33Si6026 7 Vol.-%, FeSi2 2 Vol.-%, Fe2Si04 0,5 Vol.-%, Co-Si2 5 Vol.-%, Kontaktreaktion zu Stahl C38 bei 1400°C,
   Dicke der Korrosionsschicht: max. 5 µm.
   Die Sinterung erfolgte dabei in einer Stickstoffatmosphäre bei Temperaturen im Bereich 1800 bis 1900 °C.
   Die Kontaktreaktion wurde wie folgt bestimmt:
   Es erfolgte ein Aufheizen mit einer Heizrate von 10 K/min an Luft/Argon und einer Haltezeit von ca. 1 h. Es wurde ein Anpressdruck von 50 kN ausgeübt.

## Patentansprüche

1. Werkzeug für die Handhabung oder Umformung von Bauteilen mit Eisen im Hochtemperaturbereich, das zum größten Teil aus gesintertem Siliziumnitrid gebildet ist,
**dadurch gekennzeichnet, dass** neben Siliziumnitrid 1 bis 10 Vol.-% mindestens einer chemischen Verbindung mit Eisen, als Verstärkungskomponente im Werkzeugstoff enthalten ist.

2. Werkzeug nach Anspruch 1, **dadurch gekennzeichnet, dass** die Eisenverbindung ausgewählt ist aus Siliziden, Carbiden, Nitriden, Silikaten und Oxiden.

3. Werkzeug nach Anspruch 1 oder 2, **dadurch gekennzeichnet, dass** mindestens eine weitere Verstärkungskomponente, als Silizid, Nitrid oder Carbid mit einem Element ausgewählt aus der Gruppe Ni, Co, B, Ti, Mo, W, Cr, Ta, Nb, Mn und V im Werkzeugstoff enthalten ist.

4. Werkzeug nach einem der vorhergehenden Ansprüche, **dadurch gekennzeichnet, dass** die eine oder mehrere weitere Verstärkungskomponente(n) mit einem Anteil von 1 bis 10 Vol.-% im Werkzeugwerkstoff enthalten ist/sind.

5. Werkzeug nach einem der vorhergehenden Ansprüche, **dadurch gekennzeichnet, dass** mindestens ein Sinteradditiv im Werkzeugstoff enthalten ist.

6. Verfahren zur Herstellung eines Werkzeuges nach einem der Ansprüche 1 bis 5, **dadurch gekennzeichnet, dass** ein Pulvergemisch, in dem neben Siliziumnitrid Eisen und/oder eine Eisenverbindung enthalten ist, gesintert wird und bei der Sinterung mindestens eine chemische Verbindung mit Eisen als Verstärkungskomponente mit einem Anteil von 1 bis 10 Vol.-% reaktiv im Werkzeugwerkstoff gebildet wird.

7. Verfahren nach Anspruch 6, **dadurch gekennzeichnet, dass** Eisen chemisch reagiert und/oder eine Eisenverbindung durch chemische Reaktion in eine andere chemische Verbindung mit Eisen umgewandelt wird.

8. Verfahren nach Anspruch 6 oder 7, **dadurch gekennzeichnet, dass** als Verstärkungskomponente mit Eisen mindestens ein Silizid, Carbid, Nitrid, Silikat und/oder Oxid im Werkzeugwerkstoff gebildet wird.

9. Verfahren nach einem der Ansprüche 6 bis 8, **dadurch gekennzeichnet, dass** mindestens eine weitere Verstärkungskomponente mit einem Element, das ausgewählt ist aus der Gruppe Ni, Co, B, Ti, Mo, W, Cr, Ta, Nb, Mn und V, als Silizid, Nitrid und/oder Carbid reaktiv bei der Sinterung im Werkzeugwerkstoff gebildet wird.
